# EUROPÄISCHE PATENTSCHRIFT

(11) **EP 1 355 105 B1**
(45) Veröffentlichungstag und Bekanntmachung des Hinweises auf die Patenterteilung: **18.05.2016**
(21) Anmeldenummer: 03008402.4
(22) Anmeldetag: 11.04.2003
(51) Int. Cl.: F17C 1/00, F17C 13/08, F17C 1/14

(54) **Drucktank**
Pressure vessel
Réservoir sous pression

(30) Priorität: 15.04.2002 DE 10217245
(43) Veröffentlichungstag der Anmeldung: 22.10.2003
(73) Patentinhaber: Deutsches Zentrum für Luft- und Raumfahrt e.V., 51147 Köln (DE)
(72) Erfinder: Kochendörfer, Richard, Prof., 70619 Stuttgart (DE)
(74) Vertreter: Hoeger, Stellrecht & Partner Patentanwälte mbB

(56) Entgegenhaltungen:
- WO-A-00/05535
- WO-A-02/18836
- US-A- 3 269 389
- US-A- 3 472 414
- US-A- 3 955 715
- US-A- 4 919 293
- US-A- 5 316 159
- US-A- 5 577 630
- US-A- 6 006 935
- US-B1- 6 412 650

## Beschreibung

Die Erfindung betrifft einen Drucktank zur Aufnahme eines unter Druck stehenden Fluids, welcher für einen Maximaldruck von mindestens 250 bar ausgelegt ist und welcher einen Zellverbund einer Mehrzahl von Zellen mit jeweils zwischen Kammerwänden gebildeten Aufnahmekammern umfaßt.

Drucktanks werden zur Aufnahme von unter Druck stehenden Kraftstoffen wie beispielsweise gasförmigem Erdgas, Wasserstoff oder Methanol eingesetzt. Typische Druckbelastungen liegen dabei in etwa im Bereich zwischen 250 bar und 600 bar.

Ein solcher Drucktank ist beispielsweise aus der US 5,577,630 bekannt.

Aus der US 6,095,367 und aus der WO 02/18836 A1 sind Druckbehälter mit einer Mehrzahl von Zellen und mit einem die Mehrzahl von Zellen umgebenden äußeren Gehäuse bekannt.

Die WO 00/05535 offenbart einen Druckbehälter mit mehreren, miteinander verklebten Zellen, welche einen Zellverbund bilden, der von sich kreuzenden Fäden umhüllt ist.

Die US 3,472,414 offenbart einen Druckbehälter mit einer Mehrzahl von miteinander verschweißten Zellwänden.

Davon ausgehend liegt der Erfindung die Aufgabe zugrunde, einen Drucktank der eingangs genannten Art zu schaffen, welcher bei optimierter Volumeneffektivität zur Aufnahme des Fluids eine hohe Festigkeit aufweist.

Diese Aufgabe wird bei dem gattungsgemäßen Drucktank erfingdungsgemäß dadurch gelöst, daß zur Bildung des Zellverbundes Kammerwände benachbarter Zellen miteinander verbunden sind, indem eine Kammerwand einer ersten Zelle, welcher einer Kammerwand einer benachbarten zweiten Zelle zugewandt ist, mit dieser Kammerwand der benachbarten zweiten Zelle formschlüssig verbunden ist und dass eine vom Zellverbund nach außen weisende Kammerwand oder Kammerwände abgerundet sind.

Dadurch, daß benachbarte Zellen miteinander verbunden sind, lassen sich eben zwei benachbarte Zellen über diese Kammerwände aneinander fixieren und verankern. Dadurch wiederum braucht keine äußere Verspannung vorgesehen werden, um die Zellen aneinander zu halten. Vielmehr werden die Zellen in dem Zellverbund über die Kammerwände aneinander gehalten. Es läßt sich erfindungsgemäß dadurch eine hohe Festigkeit bei hoher Volumeneffektivität erhalten. Die Zellen lassen sich dabei getrennt als eigene Einheit herstellen.

Durch das Vorsehen einer Mehrzahl von Aufnahmekammern lassen sich die einzelnen Aufnahmekammern selber mit relativ kleinem Querschnitt ausgestalten, wobei typische Werte bei einer Innenbreite zwischen 40 mm und 60 mm liegen können. Dadurch können dann auch unter hohem Druck stehende Fluide aufgenommen werden.

Insbesondere ist es möglich, von dem Zellverbund nach außen weisende Außenwände des Drucktanks mit größerem Spielraum zu gestalten. Diese lassen sich dann anpassen, beispielsweise an Ausbuchtungen einer Fahrzeugkarosserie.

Der erfindungsgemäße Drucktank läßt sich flach ausgestalten, das heißt es läßt sich eine hohe Volumeneffektivität erreichen, da benachbarte Wände mit minimiertem Zwischenraum aneinander verankert sind und so den Zellverbund bilden. Ein Zwischenraum zwischen benachbarten Aufnahmekammern nimmt ja kein Fluid auf und bei dessen Minimierung ist der Volumenanteil des Drucktanks, welcher nicht zur Fluidaufnahme dient, minimiert.

Der erfindungsgemäße Drucktank läßt sich auch auf einfache Weise herstellen, in dem beispielsweise die Zellen aus Profil- und insbesondere Strangpressprofilen gebildet sind, die dann miteinander verbunden werden.

Bei der Herstellung aus einem Leichtmetallwerkstoff wie Aluminium läßt sich auch das Gewicht des Drucktanks minimieren.

Verteilhaft ist es, dass eine Kammerwand einer ersten Zelle, welche einer Kammerwand einer benachbarten zweiten Zelle zugewandt ist, mit dieser Kammerwand der benachbarten zweiten Zelle formschlüssig verbunden ist. Auf diese Weise läßt sich der Zellverbund durch die jeweilige Verbindung benachbarter Zellen erreichen. Vom Zellverbund nach außen weisende Kammerwand oder Kammerwände sind gewölbt bzw. abgerundet ausgebildet, um so Belastungsspitzen in den Kammerwänden zu vermeiden.

Die Verbindung benachbarter Zellen läßt sich auf besonders einfache Weise erreichen, wenn die Zellen so ausgebildet sind, daß die benachbarten Kammerwände benachbarter Zellen im wesentlichen parallel sind. Diese Kammerwände lassen sich dann beispielsweise auf einfache Weise verschweißen. Es können an ihnen auch Formschlußelemente ausgebildet sein, um eine formschlüssige Verankerung herzustellen. Durch die parallele Ausbildung läßt sich der Zwischenraum zwischen den benachbarten Kammerwänden minimieren und zwar insbesondere derart, daß die Kammerwände benachbarter Zellen aneinander anliegen. Dadurch läßt sich eine hohe Volumeneffektivität erzielen.

Vorteilhafterweise sind Längsrichtungen der Zellen im Zellverbund im wesentlichen parallel. Dadurch lassen sich diese im Zellverbund auf einfache Weise ausrichten, wodurch wiederum der Zellverbund auf einfache Weise herstellbar ist. Der Drucktank läßt sich flach ausbilden, um so beispielsweise in dem Unterbodenraum eines Kraftfahrzeugs positioniert werden zu können.

Es kann vorgesehen sein, daß benachbarte Kammerwände benachbarter Zellen miteinander verschweißt sind, um so die benachbarten Zellen miteinander zu verbinden und so wiederum den Zellverbund zu schaffen.

Es kann alternativ oder zusätzlich auch vorgesehen sein, daß benachbarte Kammerwände benachbarter Zellen miteinander verankert sind und formschlüssig miteinander verbunden sind. Bei entsprechender Ausgestaltung der Formschlußverbindung läßt sich eine Querbewegung der Zellen bezogen auf die Längsrichtung sperren, während eine Positionierung in der Längsrichtung ermöglicht ist. Der Zellverbund läßt sich dadurch auf einfache und kostengünstige Weise herstellen.

Insbesondere ist es vorgesehen, daß Formschlußelemente zur formschlüssigen Verbindung benachbarter Zellen einstückig an den jeweiligen Kammerwänden ausgebildet sind, das heißt integral an oder in diesen ausgebildet sind. Dadurch läßt sich eine hohe Festigkeit der Einzelzellen und eine hohe Steifigkeit des Zellverbundes erreichen.

Günstigerweise ist über die formschlüssige Verbindung benachbarter Zellen eine Bewegung der Zellen relativ zueinander quer zu einer Längsrichtung der Zellen gesperrt, um so die Zellen fest relativ zueinander in dem Zellverbund zu halten.

Bei einer Variante einer Ausführungsform ist ein Formschlußelement an einer Kammerwand durch eine Erhebung über eine äußere Kammerwandoberfläche gebildet. Insbesondere erstreckt sich dabei die Erhebung im wesentlichen in der Längsrichtung der Zelle.

Vorteilhafterweise verbreitert die Erhebung von der Kammerwandoberfläche weg sich quer zur Längsrichtung. Dadurch läßt sich eine Sperrfläche ausbilden, über welche sich bei Eintauchen dieser Erhebung in eine angepaßte Vertiefung eine Querbewegung sperren läßt, indem nämlich eine Anlagefläche dieser Vertiefung an der Sperrfläche anliegt. Durch die insbesondere schwalbenschwanzförmige Ausbildung dieser Erhebung läßt sich dabei eine solche Querbewegungssperrung weitgehend spielfrei erreichen. Die Erhebung läßt sich dabei jedoch in der Längsrichtung der Zelle in die Vertiefung einschieben, um so die Herstellung des Zellverbundes auf einfache und kostengünstige Weise durchführen zu können.

Weiterhin kann es vorgesehen sein, daß ein Formschlußelement durch eine Vertiefung gegenüber einer Kammerwandoberfläche gebildet ist. Insbesondere erstreckt sich dabei die Vertiefung im wesentlichen in der Längsrichtung der Zelle.

Weiterhin ist es günstig, wenn die Vertiefung von der Kammerwandoberfläche weg sich quer zur Längsrichtung verbreitert, um so wie oben beschrieben, eine Sperrfläche ausbilden zu können.

Insbesondere sind dann benachbarte Zellen dadurch verbunden, daß eine Erhebung über die Kammerwandoberfläche einer ersten Zelle in eine korrespondierende Vertiefung einer Kammerwandoberfläche einer benachbarten Zelle eingetaucht ist. Dadurch sind Querbewegungen zur Längsrichtung der Zellen gesperrt. Jedoch lassen sich die benachbarten Zellen auf einfache Weise durch Aufschieben miteinander verbinden.

Bei einer Variante einer Ausführungsform sind benachbarte Zellen dadurch verbunden, daß ein oder mehrere Zwischenelemente in jeweilige Vertiefungen benachbarter Kammerwände benachbarter Zellen eingetaucht sind. Insbesondere handelt es sich dann bei einem solchen Zwischenelement um ein separates Element, welches nach der relativen Ausrichtung der beiden Zellen in die Vertiefungen eingeschoben wird.

Es kann auch vorgesehen sein, daß benachbarte Zellen dadurch verbunden sind, daß Erhebungen über Kammerwandoberflächen benachbarter Zellen in Vertiefungen einer oder mehrerer Zwischenelemente eingetaucht sind.

Zur Vereinfachung der Herstellung ist es vorgesehen, daß eine Zelle an einer benachbarten Zelle bezogen auf ihre Längsrichtung frei positionierbar ist. Es lassen sich dann die einzelnen Zellen in der Längsrichtung aufeinander aufschieben, wobei durch das Aufschieben automatisch eine Querbewegung zur Längsrichtung gesperrt ist.

Zur Erzielung einer hohen Festigkeit ist vorteilhafterweise eine Zelle so ausgebildet, daß eine vom Zellverbund nach außen weisende Kammerwand oder Kammerwände kantenfrei sind, um so Belastungsspitzen an den Kammerwänden zu vermeiden.

Es hat sich als günstig erwiesen, wenn ein Innenabstand benachbarter paralleler Kammerwände einer Zelle im wesentlichen dem doppelten Radius der Abrundung entsprechen und zwar insbesondere dann, wenn es sich um eine Zelle handelt, welche in einer Querrichtung zur Längsrichtung zwei benachbarte Zellen aufweist. Bei einer derartigen Dimensionierung lassen sich die Kammerwände relativ dünn halten und damit wiederum bei ausreichender Festigkeit die Volumeneffektivität optimieren.

Insbesondere liegt dabei ein Innenradius einer vom Zellverbund nach außen weisenden Kammerwand, gemessen in mm, im Bereich zwischen einem Zwölftel und einem Achtel des Innendrucks, gemessen in bar.

Es hat sich weiterhin als vorteilhaft erwiesen, wenn eine Wandstärke einer vom Zellverbund nach außen weisenden Kammerwand zwischen P/60 und P/30 liegt, wobei P der Innendruck, gemessen in bar, ist und die Wandstärke in mm gemessen wird. Eine solche Dimensionierung, welche direkt proportional zu dem (maximalen) Innendruck ist, welcher im Bereich zwischen 250 bar und 600 bar liegen kann, ergibt dann bei optimierter Festigkeit eine günstige Volumeneffektivität, wobei der erfindungsgemäße Drucktank in Leichtbauweise herstellbar ist und auch als Flachtank ausbildbar ist.

Es hat sich ferner als günstig erwiesen, wenn eine Innenbreite eines Aufnahmeraums zwischen im wesentlichen parallelen Kammerwänden, gemessen in mm, zwischen P/6 und P/4 liegt, wobei P der Innendruck in bar ist. Je kleiner die Innenbreite eines Aufnahmeraums gewählt wird, umso kleiner kann auch die Wandstärke der Kammerwände dimensioniert werden.

Der Drucktank läßt sich auf einfache und kostengünstige Weise herstellen, wenn die einzelnen Zellen mittels Strangpressprofilen gebildet sind. Diese sind beispielsweise aus Aluminium hergestellt, so daß sich auch ein niedriges Gewicht erreichen läßt.

Vorteilhafterweise ist eine Zelle zum Abschluß in Längsrichtung jeweils mit einem Deckelelement versehen. Es kann dabei für jede Zelle ein gesondertes Deckelelement vorgesehen sein oder mehrere Zellen können ein gemeinsames Deckelelement umfassen.

Insbesondere ist dabei ein Deckelelement mit der zugeordneten Kammerwand verschweißt, um dieses eben mit dem Zellverbund zu verbinden.

Ganz besonders vorteilhaft ist es, wenn der Zellverbund zum Halten oder zusätzlichen Sichern des oder der Deckelelemente mit einem Faserverbundwerkstoff umwickelt ist. Durch diesen Faserverbundwerkstoff läßt sich dann das oder die Deckelelemente gegenüber dem Zellverbund fixieren.

Es kann auch vorgesehen sein, daß der Zellverbund mit einem Faserverbundwerkstoff umwickelt ist, um für einen zusätzlichen Oberflächenschutz zu sorgen oder um das Halten der Zellen aneinander zusätzlich zu sichern.

Insbesondere ist der erfindungsgemäße Drucktank für einen Maximaldruck von mindestens 600 bar ausgelegt. Er läßt sich dann noch vorteilhafterweise als Drucktank in ein Kraftfahrzeug einsetzen.

Auf die Kammerwände wirken aufgrund des aufgenommenen, unter Druck stehenden Fluids Kräfte, die diese entsprechend belasten. Über gewölbte bzw. abgerundete Kammerwände, die insbesondere knickfrei und kantenfrei mit restlichen Kammerwänden zur Bildung einer Aufnahmekammer verbunden sind, lassen sich dann diese Kräfte über eine große Fläche aufnehmen und in im wesentlichen reine Zugkräfte umwandeln. Die entsprechenden unidirektionalen Zugspannungen lassen sich dann durch verringerten Materialaufwand aufnehmen und zumindest teilweise ableiten. Es läßt sich dann die erforderliche Festigkeit auch bei verringerter Wanddicke erreichen. Insbesondere sind dabei die nach außen weisenden Kammerwände gewölbt ausgebildet, da sich dann die Zugkräfte in vorgegebene Richtungen, nämlich durch die Kammerwände vorgegebene Richtungen, ideal ableiten lassen, so daß insgesamt die Wandbelastung optimiert und dabei auch minimiert ist.

Dadurch, daß eine kräftemäßige Wirkverbindung zwischen gewölbten Kammerwänden auf gegenüberliegenden Seiten des Drucktanks vorgesehen ist, lassen sich dann Kräfte als im wesentlichen reine Zugspannungen auf eben die gegenüberliegende Seite ableiten. Da aber eine gewölbte Kammerwand auf der gegenüberliegende Seite die gleichen Kräfte erfährt, lassen sich diese Zugkräfte in allen drei Raumrichtungen über die entsprechenden Wände ideal ableiten, so daß insgesamt die Wandbelastung optimiert ist und dabei auch minimiert ist.

Somit lassen sich wiederum auch bei hohen Drücken beispielsweise im Druckbereich zwischen 250 bar und 600 bar Kammerwände relativ dünn ausgestalten, wobei gleichzeitig eine hohe Festigkeit garantiert ist. Dadurch wiederum ergibt sich eine optimierte Volumeneffektivität des erfindungsgemäßen Drucktanks bei minimiertem Gewicht. Er läßt sich dabei insbesondere als Flachtank ausbilden.

Um im wesentlichen reine Zugspannungen zu erreichen, sind dabei insbesondere die Wölbungen gegenüberliegender auf entgegengesetzten Seiten des Drucktanks angeordneter Aufnahmekammern entgegengesetzt, um Kräfte übertragen zu können, welche relativ zueinander entgegengesetzte Wirkrichtung haben.

Weiterhin ist es vorteilhaft, wenn gegenüberliegende auf entgegengesetzten Seiten angeordnete Aufnahmekammern im wesentlichen spiegelsymmetrisch zueinander ausgebildet sind. Dadurch lassen sich im wesentlichen reine Zugkräfte bzw. Zugspannungen herstellen. Es genügt dabei, die spiegelsymmetrische Anordnung für einige oder einen Großteil der Aufnahmekammern vorzusehen. Unterschiedliche Aufnahmekammern können dabei unterschiedlich ausgebildet sein. Dadurch wiederum ist es möglich, den Drucktank in seiner Außenkontur an die Gegebenheiten einer Fahrzeugkarosserie mit beispielsweise lokalen Ausbuchtungen anpassen zu können.

Insbesondere sind die Aufnahmekammern im Drucktank so angeordnet und so ausgebildet, daß eine auf eine äußere Kammerwand wirkende Kraft, und zwar innere Kraft, aufgrund des aufgenommenen Fluids durch den Drucktank hindurch auf die entgegengesetzte Seite des Drucktanks ableitbar ist, um so im wesentlichen reine Zugspannungen zu erreichen.

Es ist dann auch weiterhin günstig, wenn eine Kammerwand eines Aufnahmeraums, welcher einem benachbarten Aufnahmeraum zugewandt ist, im wesentlichen eben ausgebildet ist. Über eine solche ebene Wand lassen sich eingeleitete Zugspannungen als durchgehende Zugspannungen bis zur gegenüberliegenden Seite des Drucktanks durchleiten.

Es kann auch vorgesehen sein, daß zwischen Kammerwänden Zuganker angeordnet sind. Dadurch lassen sich Zellen innerhalb eines Zellverbunds miteinander verspannen und/oder es lassen sich Kräfte definiert ableiten, um so die Stabilität zu erhöhen.

Insbesondere sind dabei Zuganker an Verbindungsstellen zwischen benachbarten Kammerwänden fixiert. Über diese Verbindungsstellen erfolgt eine Verbindung benachbarter Kammerwände, um die Zellen miteinander zu fixieren. Sie können zusätzlich auch als Verankerungsstellen für die Zuganker wirken. Der konstruktive Aufwand zur Herstellung von Verankerungsstellen für die Zuganker ist dadurch erniedrigt.

Es kann vorgesehen sein, daß jede Zelle mit jeder benachbarten Zelle über die Kammerwände verbunden ist. Dadurch erhält man eine stabile Zellverbundstruktur.

Besonders vorteilhaft ist es, wenn äußere Zellen mit benachbarten äußeren Zellen über die Kammerwände verbunden sind. Dadurch erhält man eine hohe Stabilität für das Halten der Zellen in dem Zellverbund. Es kann dabei auch vorgesehen sein, daß nur die äußeren Zellen mit benachbarten äußeren Zellen über die Kammerwände verbunden sind. Wenn dann zwischen gegenüberliegenden äußeren Zellen (bezogen auf die Außenseiten des Drucktanks) Zuganker angeordnet sind, dann lassen sich Zellen im wesentlichen über die Querschnittsbreite des Drucktanks miteinander verspannen, so daß innere Zellen aufgrund Kraftausübung der sie umgebenden Zellen in dem Zellverbund fixiert sind.

Die nachfolgende Beschreibung bevorzugter Ausführungsformen dient im Zusammenhang mit der Zeichnung der näheren Erläuterung der Erfindung.

Es zeigen:
- Fig. 1: eine Schnittansicht eines ersten Ausführungsbeispiels eines erfindungsgemäßen Drucktanks;
- Fig. 2: eine Schnittansicht eines zweiten Ausführungsbeispieles;
- Fig. 3: den Drucktank gemäß Fig. 1 mit aufgesetzten Deckelelementen;
- Fig. 4: eine Schnittansicht eines dritten Ausführungsbeispiels eines erfindungsgemäßen Drucktanks und
- Fig. 5: eine perspektivische Ansicht eines vierten Ausführungsbeispiels eines erfindungsgemäßen Drucktanks.

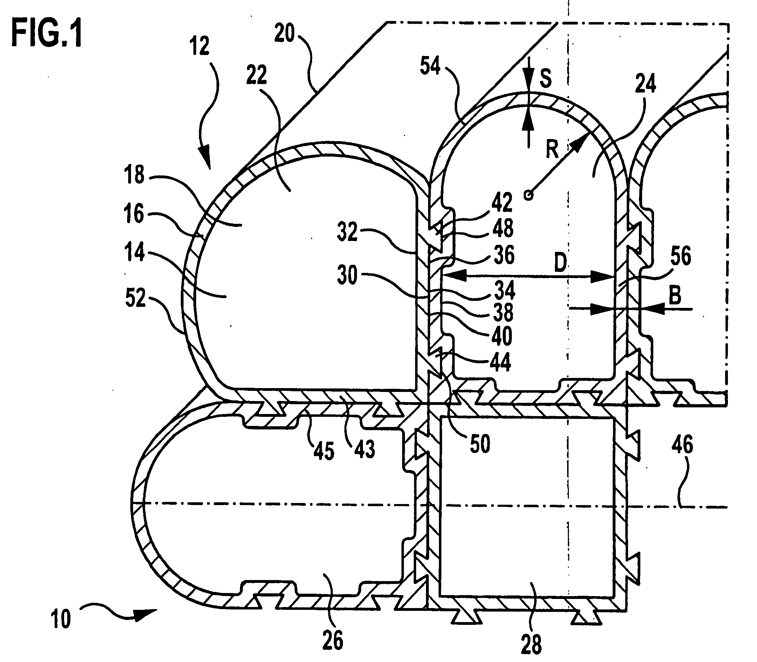

Ein ersters Ausfühurngsbeispiel eines Drucktanks, welches in Fig. 1 gezeigt und dort als Ganzes mit 10 bezeichnet ist, umfaßt einen Zellverbund 12 aus einer Mehrzahl von Zellen 14. Die Zellen können dabei sowohl in Reihen als auch in Spalten angeordnet sein, wie in Fig. 1 gezeigt. Es ist aber auch möglich, daß nur eine Reihe vorgesehen ist.

In einer Zelle 14 ist eine von Kammerwänden 16 begrenzte Aufnahmekammer 18 gebildet, welche das Fluid, beispielsweise Erdgas, Wasserstoff oder Methanol, aufnimmt. Das aufgenommene Fluid steht dabei unter Druck. Die Zellen 14 sind selbständige Einheiten und weisen insbesondere starre Kammerwände 16 auf.

Eine einzelne Zelle 14 erstreckt sich in einer Längsrichtung 20. Insbesondere sind dabei die Längsrichtungen 20 aller Zellen im Zellverbund 12 im wesentlichen parallel zueinander.

Zur Bildung des Zellverbundes 12 sind benachbarte Zellen 14 über ihre Kammerwände miteinander verbunden und zwar derart, daß eine Wegbewegung benachbarter Zellen relativ zueinander quer zur Längsrichtung 20 gesperrt ist.

Beispielsweise ist, wie in Fig. 1 gezeigt, eine obere und links außen liegende Zelle 22 mit ihrer oben rechts benachbarten Zelle 24 verbunden. Die Zelle 22 wiederum ist mit ihrer nach unten benachbarten Zelle 26 verbunden. Die Zelle 24 ist ebenfalls mit ihrer nach unten benachbarten Zelle 28 verbunden. Die Zellen 26 und 28, die seitlich benachbart sind (die Zelle 28 liegt rechts von der Zelle 26), sind ebenfalls miteinander verbunden. Die Zelle 28 ist in dem gezeigten Beispiel eine vollständig innenliegende Zelle, welche keine vom Zellverbund nach außen weisende Außenwand aufweist.

Die einzelnen Zellen 22, 24, 26, 28, welche durch Profilrohre gebildet sind, weisen jeweils eigene Kammerwände 16 auf. Der Zellverbund 12 läßt sich beispielsweise dadurch erreichen, daß die aneinandergrenzenden Kammerwände 16 benachbarter Zellen miteinander verschweißt sind.

Es kann alternativ oder zusätzlich vorgesehen sein, daß die benachbarten Kammerwände benachbarter Zellen aneinander verankert sind. Die Zellen 14 sind dabei so ausgebildet, daß sie eine im wesentlichen ebene Kammerwand aufweisen, welche der benachbarten Zelle zugewandt ist. Beispielsweise umfaßt die Zelle 22 eine der Zelle 24 zugewandte Kammerwand 30 mit einer im wesentlichen ebenen Innenfläche 32 und im wesentlichen ebenen Außenfläche 34.

Die Zelle 24 umfaßt eine Kammerwand 36 mit einer im wesentlichen ebenen Innenfläche 38 und einer im wesentlichen ebenen Außenfläche 40, welche der Außenfläche 34 der Zelle 22 zugewandt ist.

Ferner umfaßt die Zelle 22 eine Kammerwand 43, welche im wesentlichen senkrecht auf die Kammerwand 30 steht und eine im wesentlichen ebene, einer Außenfläche der benachbarten Kammerwand 45 der Zelle 26 zugewandten Außenfläche aufweist.

Über die Außenfläche 34 der Kammerwand 30 sind beabstandet Erhebungen 42, 44 gebildet, die parallel zueinander sich in der Längsrichtung 20 erstrecken. Eine solche Erhebung 42, 44 verbreitert sich dabei schwalbenschwanzförmig in einer Querrichtung 46 zur Längsrichtung 20 mit einem trapezförmigen Querschnitt. Eine Breite einer solchen Erhebung 42, 44 ist dadurch an einem Fußpunkt beim Ansatz an der Außenfläche 34 der Kammerwand 30 kleiner als in einem Abstand zu dieser Außenfläche 34.

Die Erhebungen 42, 44 dienen als Formschlußelemente, um die Kammerwände 30 und 36 formschlüssig aneinander verankern zu können. Dazu weist die Kammerwand 36 an die Erhebungen 42, 44 jeweils angepaßte Vertiefungen 48, 50 bezogen auf ihre Außenfläche 40 auf. Diese Vertiefungen 48, 50 dienen jeweils zur Aufnahme der Erhebungen 42, 44. Die Vertiefungen 48, 50 sind dabei entsprechend schwalbenschwanzförmig ausgebildet, wobei sich ihre Breite von der Außenfläche 40 weg vergrößert, um eben die Erhebungen 42, 44 aufnehmen zu können.

Über die Erhebungen 42, 44 ist die Zelle 22 auf die Zelle 24 in der Längsrichtung 20 aufschiebbar bzw. die Zelle 24 auf die Zelle 22 aufschiebbar. Jedoch ist die Bewegung in der Querrichtung 46 gesperrt, wenn jeweils die Erhebung 42 in die Vertiefung 48 eintaucht und die Erhebung 44 in die Vertiefung 50 eintaucht. Es sind dann die Zellen 22 und 24 bezüglich Querbewegungen zur Längsrichtung 20 aneinander verankert.

Auf die gleiche Weise läßt sich die Zelle 22 mit der Zelle 26 verbinden, die Zelle 24 mit der Zelle 28 verbinden und die Zelle 26 mit der Zelle 28 verbinden. Über eine derartige Verankerung benachbarter Zellen aneinander ist schließlich der Zellverbund 12 gebildet.

Erfindungsgemäß ist es vorgesehen, daß im Zellverbund 12 innenliegende Kammerwände, zum Beispiel die Kammerwände 30 und 36, miteinander durch Formschlußelemente mit einstückig gebildeten Erhebungen 42, 44 und den korrespondierenden Vertiefungen 48, 50 miteinander verbunden sind. Dadurch sind benachbarte Zellen 22 und 24, 26 und 28, 22 und 26, 24 und 28 aneinander verankert und damit aneinander gehalten. Dadurch wiederum ergibt sich Gestaltungsfreiraum für von dem Zellverbund 12 nach außen weisende Kammerwände. Diese sind insbesondere so ausgestaltet, daß die Festigkeitsanforderungen des Drucktanks 10 bezogen auf das von ihm aufgenommene, unter Druck stehende Fluid erfüllt sind.

Insbesondere sind dabei solche Außenwände kantenfrei mit den restlichen Kammerwänden verbunden, um Spitzen bei der Spannungsbelastung zu vermeiden.

Insbesondere ist es vorgesehen, daß eine Außenkammerwand gewölbt (abgerundet) und insbesondere kreisförmig abgerundet ist. Die Zelle 22 beispielsweise weist eine Außenwand 52 auf, welche einstückig an den Kammerwänden 43 und 30 sitzt. Sie sitzt so an der Außenwand 43, daß im Übergang keine Kante gebildet ist, das heißt, daß die Tangente ihrer Innenfläche mindestens am Übergang mit der Tangente der Innenfläche der Kammerwand 43 zusammenfällt. Gleiches gilt für den Übergang der Außenwand 52 an der Kammerwand 30. Die Wandstärke der Außenwand 52 ist überall im wesentlichen gleich.

Eine Außenwand 54 der Zelle 24 ist im Querschnitt halbkreisförmig ausgestaltet mit einem Radius R. Die Wandstärke S ist dabei überall im wesentlichen gleich. Auch hier erfolgt ein kontinuierlicher kantenfreier Übergang mindestens der Innenfläche an die Kammerwand 36 und an die dieser gegenüberliegenden Kammerwand 56.

Es hat sich zur Erzielung einer hohen Festigkeit als vorteilhaft erwiesen, wenn eine Zelle 24, 26, welche eine Außenwand (bei der Zelle 24 die Außenwand 54) und zwei benachbarte Zellen aufweist, eine lichte Querbreite D hat, welche im wesentlichen dem Doppelten des Radius R entspricht.

Es hat sich ferner als vorteilhaft erwiesen, wenn die Wanddicke S einer Außenwand 52 bzw. 54, gemessen in mm, im Bereich zwischen P/60 und P/30 liegt, wobei P der Innendruck, gemessen in bar, ist. Bei der Auslegung wird dabei als Innendruck der maximale Auslegungsdruck genommen, wobei ein typischer Wert 600 bar ist.

Die Querbreite D liegt dabei vorzugsweise zwischen P/6 und P/4 (D in mm und P in bar).

Es hat sich ferner als günstig erwiesen, wenn eine doppelte Wandstärke B von benachbarten und aneinander angrenzenden Kammerwänden im Bereich zwischen dem Zweifachen von S und dem Fünffachen von S liegt. Die Breite B entspricht dem Abstand zwischen den jeweiligen Innenflächen benachbarter Kammerwände benachbarter Zellen, beispielsweise dem Abstand zwischen den Innenflächen 32 und 38 der Kammerwände 30 und 36.

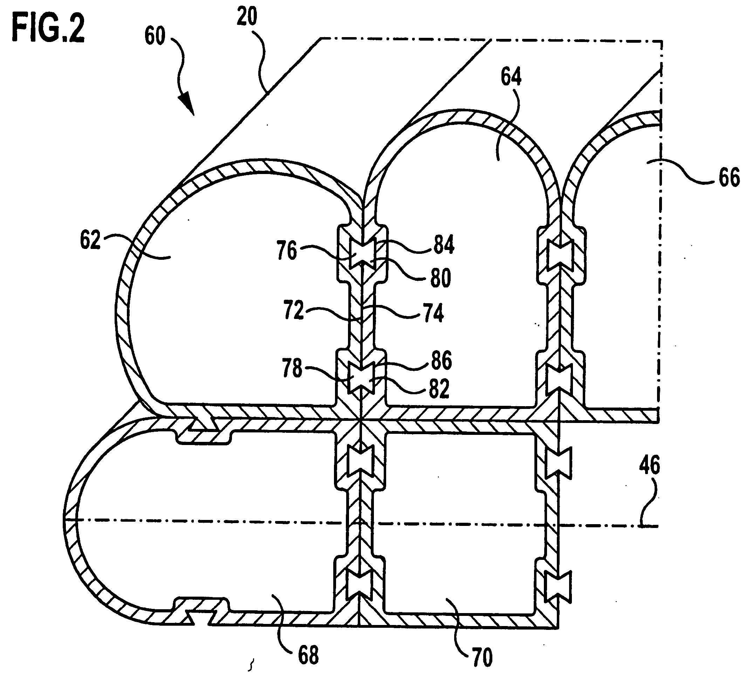

Bei einem zweiten Ausführungsbeispiel, welches in Fig. 2 gezeigt ist, umfaßt ein Zellverbund 60 wiederum eine Mehrzahl aneinander verankerter Zellen 62, 64, 66, 68, 70 usw. Jedoch sind benachbarte Kammerwände 72, 74 benachbarter Zellen nicht mit Erhebungen versehen, sondern jeweils nur mit Vertiefungen 76, 78 (Kammerwand 72) und 80, 82 (Kammerwand 74). Diese sind schwalbenschwanzförmig ausgebildet und zwar grundsätzlich gleich wie oben im Zusammenhang mit den Vertiefungen 48 und 50 beschrieben.

Es ist dann für jedes Paar von Vertiefungen 76, 80 und 78, 82 ein Zwischenelement 84 bzw. 86 vorgesehen, welches einstückig ausgebildet ist und eine angepaßte doppelschwalbenschwanzförmige Gestalt hat mit einer Erstreckung in Längsrichtung 20. Ein solches Zwischenelement 84 bzw. 86 läßt sich dann in das Paar der Vertiefungen 76, 80 bzw. 78, 82 einschieben. Bei eingetauchten Zwischenelementen 84 und 86 wiederum ist die Querbewegung der miteinander verbundenen und verankerten Zellen 62 und 64 gesperrt.

Ansonsten sind die Zellen gemäß dem zweiten Ausführungsbeispiel gleich ausgebildet wie oben anhand des ersten Ausführungsbeispiels beschrieben.

Es kann auch vorgesehen sein, daß benachbarte Zellwände benachbarter Zellen anstatt Vertiefungen nur Erhebungen aufweisen. Entsprechend muß dann eine Zwischenelement ausgestaltet sein, auf welches sich die Zellen mit den Erhebungen aufschieben lassen. Dieses Zwischenelement muß dann eine solche Breite aufweisen, daß sich in ihm eben Vertiefungen ausbilden lassen.

Durch die Ausbildung der einzelnen Zellen 14 bzw. 62 als Strangpressprofile lassen diese sich in ihrer Längsrichtung 20 aneinander positionieren, während durch die korrespondierenden Formschlußelemente an benachbarten Kammerwänden benachbarter Zellen eine Sperrung der Querbewegung in der Richtung 46 erreichbar ist.

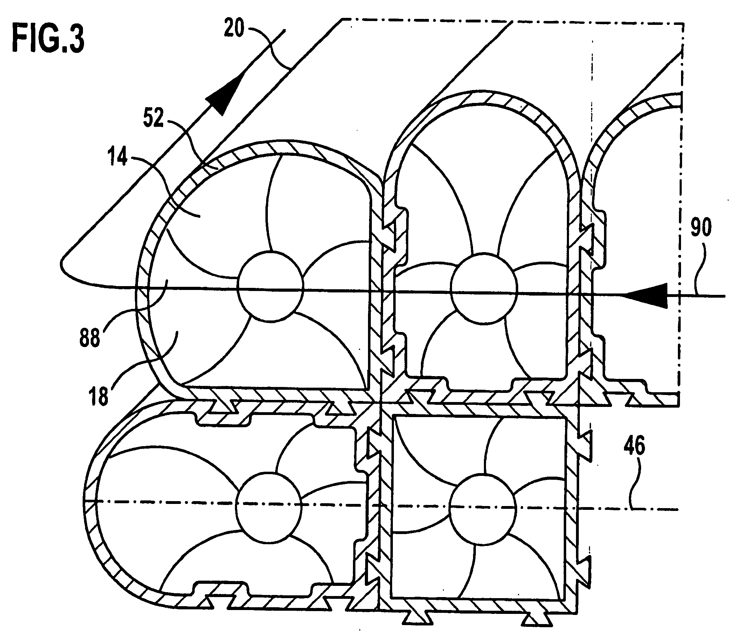

Die Aufnahmekammern 18 werden bezogen auf die Längsrichtung 20 vorne und hinten mit jeweils einem Deckelelement 88 (Fig. 3) verschlossen. Es kann dabei vorgesehen sein, daß jede Zelle 14 getrennt mit einem solchen Deckelelement 88 verschlossen wird oder das mehrere Deckelelemente für mehrere Zellen zusammenhängen.

Ein Deckelelement 88 wird mit Kammerwänden der entsprechenden Zelle 14 insbesondere verschweißt.

Es kann alternativ oder zusätzlich vorgesehen sein, daß ein Deckelelement 88 an dem Zellverbund 12 gehalten oder zusätzlich gesichert ist, indem ein Faserverbundwerkstoff um den Zellverbund 12 gewickelt ist. Dies ist in Fig. 3 durch das Bezugszeichen 90 angedeutet. Insbesondere werden dabei an dem einen Ende des Zellverbundes 12 Fasern quer zur Längsrichtung 20 gelegt, beispielsweise in die Querrichtung 46, dann an der Außenwand, beispielsweise der Außenwand 52 umgelenkt in die Richtung 20, am anderen Ende des Zellverbundes 12 wiederum in die Richtung 46 umgelenkt und dann wieder zurückgeführt in der Längsrichtung 20. Es werden dann eine Vielzahl von solchen Wicklungen durchgeführt, um entsprechend die Deckelelemente 88 an dem Zellverbund 12 zu halten oder zu sichern.

Nach Umwicklung werden die Fasern mit einem Matrixmaterial imprägniert.

Darüber hinaus kann es auch noch vorgesehen sein, daß der Zellverbund 12 in weiteren Richtungen umwickelt wird und zwar insbesondere in weitere Querrichtungen zur Längsrichtung 20, um den Zellverbund 12 zusätzlich zu sichern. Möglich ist beispielsweise eine Wicklung mit den beiden Wicklungsrichtungen jeweils in Querrichtung zur Längsrichtung 20, und zwei Wicklungen mit einer Wicklungsrichtung in der Längsrichtung 20 und einer Wicklungsrichtung in den jeweiligen Querrichtungen zu dieser Längsrichtung 20.

Anschlußelemente zur Zuführung und Abführung von Fluid können an eine oder mehreren außen liegenden Zellen des Zellverbunds 12 angeordnet sein oder auch an Deckelelementen 88.

Der erfindungsgemäße Drucktank läßt sich auf einfache Weise herstellen. Er läßt sich über die Zusammensetzung als Zellverbund 12 flach ausbilden. Aufgrund der Verankerung der einzelnen Zellen aneinander ist eine große Formenvielfalt zugelassen. Beispielsweise läßt sich ein solcher Drucktank bei entsprechender Formgestaltung in den Unterboden eines Kraftfahrzeuges integrieren. Es lassen sich auch Außenwände entsprechend gestalten, um den Drucktank beispielsweise an Ausflanschungen oder dergleichen in einem Kraftfahrzeug anpassen zu können.

Eine Fluidverbindung zwischen einzelnen Zellen 40 läßt sich über Verbindungsöffnungen zwischen den Kammerwänden benachbarter Zellen erreichen. Es kann aber auch vorgesehen sein, daß entsprechende Verbindungen über die Deckelelemente 88 hergestellt werden.

Auf die Kammerwände wirken aufgrund des aufgenommenen unter Druck stehenden Fluids Kräfte, die diese entsprechend belasten. Über die gewölbten Kammerwände, die insbesondere knickfrei und kantenfrei mit den restlichen Kammerwänden zur Bildung einer entsprechenden Aufnahmekammer verbunden sind, lassen sich diese Kräfte über eine große Fläche aufnehmen, und in im wesentlichen reine - unidirektionale - Zugkräfte umwandeln. Die entsprechenden Zugspannungen lassen sich dann durch verringerten Materialaufwand aufnehmen. Gleichzeitig lassen sich diese Zugkräfte zumindest teilweise ableiten und dabei insbesondere auf die gegenüberliegende Seite ableiten. Da eine gewölbte Kammerwand auf der gegenüberliegenden Seite die gleichen Kräfte erfährt, lassen sich Kräfte in bestimmten, durch den Aufbau des Drucktanks vorgegebenen Richtungen ideal ableiten, so daß insgesamt die Wandbelastung optimiert ist und dabei auch minimiert ist.

Die wirksamen Kraftübertragungsrichtungen zur Ableitung der Zugkräfte liegen dabei in allen drei Raumrichtungen, das heißt in den Längsrichtungen 20 und den beiden Querrichtungen dazu entlang der Kammerwände.

Vorteilhafterweise liegt die Breite eines Aufnahmeraums im Bereich zwischen 30 mm und 70 mm und insbesondere zwischen 20 mm und 60 mm. Durch solche relativ kleinen wabenförmigen Aufnahmekammern läßt sich der Drucktank in seiner äußeren Gestalt an die Gegebenheiten, beispielsweise einer Fahrzeugkarosserie, anpassen, so daß auch Einbuchtungen im Drucktank ausbildbar sind, ohne daß das strukturelle Konzept des Drucktanks wesentlich verändert werden muß.

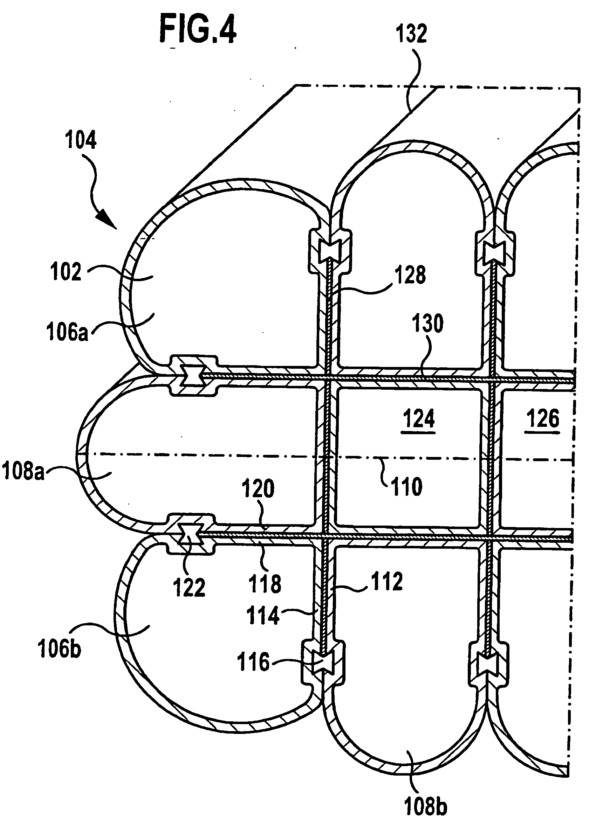

Bei einem dritten Ausführungsbeispiel eines erfindungsgemäßen Drucktanks, welches in Fig. 4 gezeigt ist, sind Zellen 102 in einem Zellverbund 104 angeordnet. Der Zellverbund 104 umfaßt dabei außenliegende Zellen 106a und 106b, welche eine dem Außenraum zugewandte Außenseite aufweisen und jeweils am Abschluß sowohl einer Reihe als auch einer Spalte angeordnet sind.

Ferner sind außenliegende Zellen 108a, 108b vorgesehen, welche eine zum Außenraum hin weisende Außenseite aufweisen und entweder eine Reihe oder eine Spalte abschließen.

Die äußeren Kammerwände der außenliegenden Zellen 106a, 106b und 108a, 108b sind wie oben beschrieben gewölbt ausgebildet.

Insbesondere ist der Zellverbund 104 symmetrisch bezüglich einer Spiegelebene 110 ausgebildet. Zellen, welche bezogen auf die Spiegelebene 110 symmetrisch gegenüberliegen, weisen eine gleiche Wandausbildung auf.

Beispielsweise sind die außenliegenden Zellen 106a und 106b symmetrisch bezüglich der Spiegelebene 110 ausgebildet.

Ferner ist eine rechtwinklig zur Spiegelebene 110 orientierte Spiegelebene vorgesehen, zu welcher der Zellverbund spiegelsymmetrisch ist.

Grundsätzlich ist es möglich, daß zur Bildung eines Zellverbunds jede Zelle mit jeder benachbarten Zelle über die Kammerwände verbunden ist. Ein entsprechender Zellverbund ist in der Fig. 1 gezeigt.

Bei dem in Fig. 2 gezeigten Ausführungsbeispiel sind innere Zellen 70 über gegenüberliegende Kammerwände mit benachbarten Zellen verbunden, wobei die Verbindung nur über zwei Seiten und nicht über vier Seiten erfolgt.

Vorteilhaft ist es, wenn äußere Zellen mit benachbarten äußeren Zellen über Kammerwände verbunden sind, wobei insbesondere jede außenliegende Zelle (äußere Zelle) mit den benachbarten beiden äußeren Zellen über die benachbarten Kammerwände verbunden ist. So ist in Fig. 4 die Zelle 108b mit der Zelle 106b über eine an den einander zugewandten Kammerwänden 112, 114 angeordnete Verbindung 116 verbunden. Bei dieser Verbindung handelt es sich insbesondere um eine Formschlußverbindung wie oben beschrieben.

Die Zelle 106b ist ferner mit der benachbarten äußeren Zelle 108a über die aneinander angrenzenden Kammerwände 118 und 120 verbunden. Bei einer entsprechenden Verbindung 122 handelt es sich insbesondere um eine Formschlußverbindung.

Innenliegende Zellen wie die Zellen 124, 126 gemäß Fig. 4 werden in dem Zellverbund 104 durch Druckausübung der umgebenden Zellen gehalten.

Vorzugsweise sind dabei Zuganker 128 vorgesehen, welche zwischen einander zugewandten Kammerwänden quer und insbesondere senkrecht zu der Spiegelebene 110 verlaufen. Diese Zuganker verspannen außenliegende Zellen (in Fig. beispielsweise die Zellen 106a und 106b) in einer Richtung quer zur Spiegelebene 110 miteinander bzw. über sie sind definiert Kräfte ableitbar.

Vorzugsweise sind diese Zuganker 128 an den entsprechenden Verbindungsstellen fixiert, an denen die bezogen auf eine Richtung parallel zur Spiegelebene 110 benachbarten Zellen über die Kammerwände miteinander verbunden sind.

Ferner sind Zuganker 130 vorgesehen, welche im wesentlichen parallel zur Spiegelebene 110 verlaufen und entsprechende Zellen an gegenüberliegenden Seiten des Drucktanks miteinander verspannen. Die Spannrichtung ist dabei quer und insbesondere senkrecht zur Spannrichtung der Zuganker 130.

Durch die Zuganker 128, 130 werden bezogen auf die Spiegelebene 110 und die weitere Spiegelebene gegenüberliegende außenliegende Zellen miteinander bezüglich der Kräfteableitung gekoppelt und insbesondere miteinander verspannt. Durch die quer zueinander liegenden und insbesondere senkrecht liegenden Spannrichtungen wird eine zusätzliche Sicherung des Halts des Zellverbunds 104 bewirkt.

Die Zuganker 128, 130 sind in einer Längsrichtung 132 des Drucktanks beabstandet angeordnet. Sie bilden dadurch ein kubisches Zugankergitter. Die Ankerpunkte für die Zuganker sind die Verbindungsstellen 116, 122 usw., über welche außenliegende Zellen 106b, 108b bzw. 106a, 108a miteinander verbunden sind.

Die Zuganker 128, 130 erstrecken sich zwischen gegenüberliegenden Verbindungen durch den Zellverbund 102 hindurch.

Es ist dabei auch möglich, Zuganker vorzusehen, welche sich nur über den Bereich einer Zelle erstrecken; beispielsweise kann ein Zuganker dazu dienen, nur benachbarte Zellen direkt miteinander zu verbinden. (Bei dem Ausführungsbeispiel gemäß Fig. 4 werden benachbarte Zellen nur indirekt miteinander über die Zuganker 128, 130 gekoppelt.

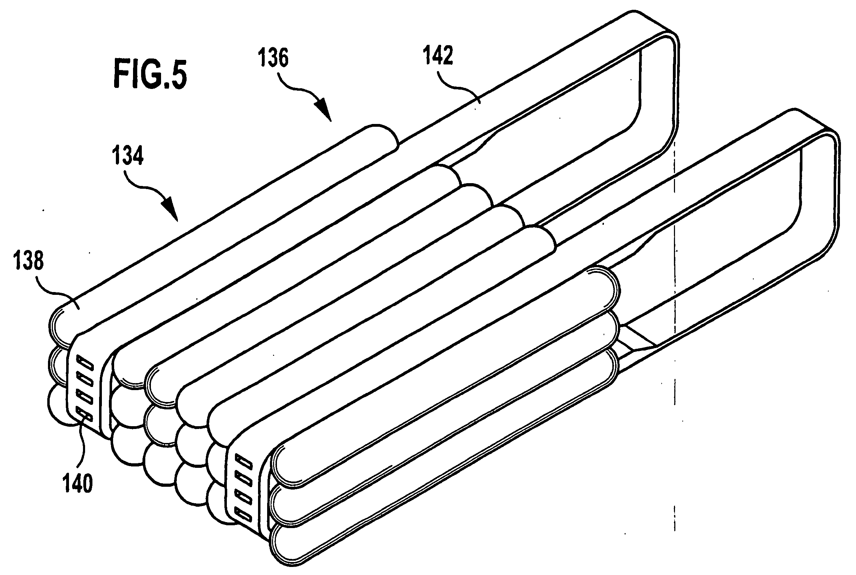

Bei einem fünften Ausführungsbeispiels des Drucktanks, welches in Fig. 5 gezeigt ist und dort als Ganzes mit 134 bezeichnet ist, ist wiederum ein Zellverbund 136 mit einer Mehrzahl von Zellen 138 vorgesehen. Benachbarte Zellen und mindestens außenliegende benachbarte Zellen sind über die einander zugewandten Kammerwände miteinander verbunden.

Es kann vorgesehen sein, daß zwischen benachbarten Zellen 138 Freiräume 140 gebildet sind bzw. angeordnet sind, die dazu dienen, beispielsweise Leitungen wie Auspuffleitungen, elektrische Leitungen, hydraulische Leitungen, Kraftstoffleitungen usw. aufzunehmen. Die Freiräume sind dabei in einer Profilstruktur 142 gebildet, welche aus einem metallischen Material oder einem Kunststoffmaterial hergestellt ist. Eine solche Profilstruktur ist dabei so ausgebildet, daß Kammerwände der Zellen 138, welche der Profilstruktur 142 benachbart sind, durch diese stabilisiert werden. Beispielsweise sind entsprechende Aussteifungen vorgesehen.

Die Profilstruktur 142 ist dabei ferner so ausgebildet, daß sie über den Drucktank 134 hinausragt und mit ihrer Hilfe eine Tragstruktur gebildet ist, welche beispielsweise zur Fixierung des Drucktanks 134 an einem Fahrzeug dient. Sie kann auch zur Fixierung von weiteren Elementen an dem Drucktank dienen.

## Patentansprüche

1. Drucktank zur Aufnahme eines unter Druck stehenden Fluids, welcher für einen Maximaldruck von mindestens 250 bar ausgelegt ist und welcher einen Zellverbund (12) einer Mehrzahl von Zellen (14) mit jeweils zwischen Kammerwänden (16) gebildeten Aufnahmekammern (18) umfasst, wobei eine vom Zellverbund (12) nach außen weisende Kammerwand (52; 54) oder Kammerwände abgerundet sind, **dadurch gekennzeichnet, dass** zur Bildung des Zellverbundes (12; 104) Kammerwände (30, 36; 112, 114) benachbarter Zellen (22, 24; 106b, 108b) ohne eine äußere Verspannung des Zellverbunds (12) miteinander verbunden sind, indem eine Kammerwand (30) einer ersten Zelle (22), welche einer Kammerwand (36) einer benachbarten zweiten Zelle (24) zugewandt ist, mit dieser Kammerwand (36) der benachbarten zweiten Zelle (24) formschlüssig verbunden ist.

2. Drucktank nach Anspruch 1, **dadurch gekennzeichnet, daß** die Zellen (14) so ausgebildet sind, daß die benachbarten Kammerwände (30, 36) benachbarter Zellen (22, 24) im wesentlichen parallel sind.

3. Drucktank nach einem der vorangehenden Ansprüche, **dadurch gekennzeichnet, daß** Längsrichtungen der Zellen (14) im Zellverbund (12) im wesentlichen parallel sind.

4. Drucktank nach einem der vorangehenden Ansprüche, **dadurch gekennzeichnet, daß** benachbarte Kammerwände (30, 36) benachbarter Zellen (22, 24) miteinander verschweißt sind.

5. Drucktank nach einem der vorangehenden Ansprüche, **dadurch gekennzeichnet, daß** benachbarte Kammerwände (30, 36; 72, 74) benachbarter Zellen (22, 24; 62, 64) aneinander verankert sind.

6. Drucktank nach einem der vorangehenden Ansprüche, **dadurch gekennzeichnet, daß** Formschlußelemente (42, 48; 76, 80) zur formschlüssigen Verbindung benachbarter Zellen (22, 24; 62, 64) einstückig an den jeweiligen Kammerwänden (30, 36; 72, 74) ausgebildet sind.

7. Drucktank nach einem der vorangehenden Ansprüche, **dadurch gekennzeichnet, daß** über die formschlüssige Verbindung benachbarter Zellen (22, 24; 62, 64) eine Bewegung der Zellen relativ zueinander quer zu einer Längsrichtung (20) der Zellen gesperrt ist.

8. Drucktank nach einem der vorangehenden Ansprüche, **dadurch gekennzeichnet, daß** ein Formschlußelement an einer Kammerwand (30) durch eine Erhebung (42; 44) über eine äußere Kammerwandoberfläche (34) gebildet ist.

9. Drucktank nach Anspruch 8, **dadurch gekennzeichnet, daß** die Erhebung (42; 44) sich in der Längsrichtung (20) der Zelle (22) erstreckt.

10. Drucktank nach Anspruch 8 oder 9, **dadurch gekennzeichnet, daß** die Erhebung (42; 44) von der Kammerwandoberfläche (34) weg sich quer zur Längsrichtung (20) verbreitert.

11. Drucktank nach einem der Ansprüche 8 bis 10, **dadurch gekennzeichnet, daß** die Erhebung (42; 44) schwalbenschwanzförmig ausgebildet ist.

12. Drucktank nach einem der vorangehenden Ansprüche, **dadurch gekennzeichnet, daß** ein Formschlußelement durch eine Vertiefung (48; 76) gegenüber einer Kammerwandoberfläche (34) gebildet ist.

13. Drucktank nach Anspruch 12, **dadurch gekennzeichnet, daß** die Vertiefung (48; 76) sich in der Längsrichtung (20) der Zelle (24; 64) erstreckt.

14. Drucktank nach Anspruch 12 oder 13, **dadurch gekennzeichnet, daß** die Vertiefung (48; 56) von der Kammerwandoberfläche (40) weg sich quer zur Längsrichtung (20) verbreitert.

15. Drucktank nach einem der Ansprüche 12 bis 14, **dadurch gekennzeichnet, daß** die Vertiefung (48; 76) schwalbenschwanzförmig ausgebildet ist.

16. Drucktank nach einem der vorangehenden Ansprüche, **dadurch gekennzeichnet, daß** benachbarte Zellen (22, 24) dadurch verbunden sind, daß eine Erhebung (42; 44) über die Kammerwandoberfläche (34) einer ersten Zelle (22) in eine korrespondierende Vertiefung (48; 50) einer Kammerwandoberfläche (40) einer benachbarten Zelle (24) eingetaucht ist.

17. Drucktank nach einem der vorangehenden Ansprüche, **dadurch gekennzeichnet, daß** benachbarte Zelle (62, 64) dadurch verbunden sind, daß ein oder mehrere Zwischenelemente (84; 86) in jeweilige Vertiefungen (76, 80; 78, 82) benachbarter Kammerwände (72, 74) benachbarter Zellen (62, 64) eingetaucht sind.

18. Drucktank nach einem der vorangehenden Ansprüche, **dadurch gekennzeichnet, daß** benachbarte Zellen dadurch verbunden sind, daß Erhebungen über Kammerwandoberflächen benachbarter Zellen in ein oder mehrere Vertiefungen von Zwischenelementen eingetaucht sind.

19. Drucktank nach einem der vorangehenden Ansprüche, **dadurch gekennzeichnet, daß** eine Zelle (22) an einer benachbarten Zelle (24) bezogen auf ihrer Längsrichtung (20) frei positionierbar ist.

20. Drucktank nach einem der vorangehenden Ansprüche, **dadurch gekennzeichnet, daß** eine Zelle (22; 24) so ausgebildet ist, daß ihre vom Zellverbund (12) nach außen weisende Kammerwand (52; 54) oder Kammerwände kantenfrei sind.

21. Drucktank nach einem der vorangehenden Ansprüche, **dadurch gekennzeichnet, daß** ein Innenabstand (D) benachbarter paralleler Kammerwände (30, 36) einer Zelle (24) dem doppelten Radius (R) der Abrundung entspricht.

22. Drucktank nach einem der vorangehenden Ansprüche, **dadurch gekennzeichnet, daß** ein Innenradius (R) einer vom Zellverbund (12) nach außen weisenden Kammerwand (54), gemessen in mm, im Bereich zwischen einem Zwölftel und einem Achtel des Innendrucks (P) gemessen in bar, liegt.

23. Drucktank nach einem der vorangehenden Ansprüche, **dadurch gekennzeichnet, daß** eine Wandstärke (S) der vom Zellverbund (12) nach außen weisenden Kammerwand (54) zwischen P/60 und P/30 liegt, wobei P der Innendruck, gemessen in bar, ist und die Wandstärke (S) in mm gemessen wird.

24. Drucktank nach einem der vorangehenden Ansprüche, **dadurch gekennzeichnet, daß** die einzelnen Zellen (14) mittels Strangpressprofilen gebildet sind.

25. Drucktank nach einem der vorangehenden Ansprüche, **dadurch gekennzeichnet, daß** eine Zelle (14) zum Abschluß in Längsrichtung (20) jeweils mit einem Deckelelement (88) versehen ist.

26. Drucktank nach Anspruch 25, **dadurch gekennzeichnet, daß** ein Deckelelement (88) mit den zugeordneten Kammerwänden (16) verschweißt ist.

27. Drucktank nach Anspruch 25 oder 26, **dadurch gekennzeichnet, daß** der Zellverbund (12) zum Halten oder zusätzlichen Sichern des oder der Deckelelemente (88) mit einem Faserverbundwerkstoff umwickelt ist.

28. Drucktank nach einem der vorangehenden Ansprüche, **gekennzeichnet durch** eine Auslegung für einen Maximaldruck von mindestens 600 bar.

29. Drucktank nach einem der vorangehenden Ansprüche, **dadurch gekennzeichnet, daß** zum Außenraum weisende Kammerwände (16; 54) gewölbt ausgebildet sind und wobei gewölbte Kammerwände von Aufnahmekammern, welche gegenüberliegend auf entgegengesetzten Seiten des Drucktanks angeordnet sind, in kräftemäßiger Wirkverbindung stehen.

30. Drucktank nach Anspruch 29, **dadurch gekennzeichnet, daß** die Wölbung gegenüberliegender auf entgegengesetzten Seiten des Drucktanks angeordneter Aufnahmekammern entgegengesetzt ist.

31. Drucktank nach einem der vorangehenden Ansprüche, **dadurch gekennzeichnet, daß** gegenüberliegende auf entgegengesetzten Seiten des Drucktanks angeordnete Aufnahmekammern im wesentlichen spiegelsymmetrisch zueinander ausgebildet sind.

32. Drucktank nach einem der vorangehenden Ansprüche, **dadurch gekennzeichnet, daß** die Aufnahmekammern im Drucktank so angeordnet und so ausgebildet sind, daß eine auf eine äußere Kammerwand wirkende Kraft durch den Drucktank hindurch auf die entgegengesetzte Seite des Drucktanks ableitbar ist.

33. Drucktank nach einem der vorangehenden Ansprüche, **dadurch gekennzeichnet, daß** jede ebene Kammerwand (32, 43) zum Außenraum hin durch eine gewölbte Kammerwand (16) geschlossen ist.

34. Drucktank nach einem der vorangehenden Ansprüche, **dadurch gekennzeichnet, daß** zwischen Kammerwänden (112, 114; 118, 120) Zuganker (128; 130) angeordnet sind.

35. Drucktank nach Anspruch 34, **dadurch gekennzeichnet, daß** Zuganker (128) an Verbindungsstellen (116) zwischen benachbarten Kammerwänden (112, 114) fixiert sind.

36. Drucktank nach einem der vorangehenden Ansprüche, **dadurch gekennzeichnet, daß** jede Zelle mit jeder benachbarten Zelle über die Kammerwände verbunden ist.

37. Drucktank nach einem der vorangehenden Ansprüche, **dadurch gekennzeichnet, daß** äußere Zellen (108a) mit benachbarten äußeren Zellen (106a, 106b) über die Kammerwände verbunden sind.

38. Drucktank nach Anspruch 37, **dadurch gekennzeichnet, daß** zwischen gegenüberliegenden äußeren Zellen (106a, 106b) Zuganker (128) angeordnet sind.

## Claims

1. Pressure tank for holding a pressurized fluid, which is configured for a maximum pressure of at least 250 bar and which comprises a cell composite (12) of a plurality of cells (14) with holding chambers (18) respectively formed between chamber walls (16), wherein a chamber wall (52; 54) or chamber walls facing outwards from the cell composite (12) are rounded, **characterized in that** for formation of the cell composite (12; 104), chamber walls (30, 36; 112, 114) of adjacent cells (22, 24; 106b, 108b) are connected to one another, without an external tensioning of the cell composite (12), by a chamber wall (30) of a first cell (22) which faces a chamber wall (36) of an adjacent second cell (24) being connected to this chamber wall (36) of the adjacent second cell (24) with positive locking.

2. Pressure tank in accordance with claim 1, **characterized in that** the cells (14) are so constructed that the adjacent chamber walls (30, 36) of adjacent cells (22, 24) are substantially parallel.

3. Pressure tank in accordance with any one of the preceding claims, **characterized in that** longitudinal directions of the cells (14) in the cell composite (12) are substantially parallel.

4. Pressure tank in accordance with any one of the preceding claims, **characterized in that** adjacent chamber walls (30, 36) of adjacent cells (22, 24) are welded to each other.

5. Pressure tank in accordance with any one of the preceding claims, **characterized in that** adjacent chamber walls (30, 36; 72, 74) of adjacent cells (22, 24; 62, 64) are anchored to each other.

6. Pressure tank in accordance with any one of the preceding claims, **characterized in that** positive locking elements (42, 48; 76, 80) for positive-locking connection of adjacent cells (22, 24; 62, 64) are formed in one piece on the respective chamber walls (30, 36; 72, 74).

7. Pressure tank in accordance with any one of the preceding claims, **characterized in that** movement of the cells relative to one another transversely to a longitudinal direction (20) of the cells is blocked via the positive-locking connection of adjacent cells (22, 24; 62, 64).

8. Pressure tank in accordance with any one of the preceding claims, **characterized in that** a positive-locking element on a chamber wall (30) is formed by an elevation (42; 44) over an outer chamber wall surface (34).

9. Pressure tank in accordance with claim 8, **characterized in that** the elevation (42; 44) extends in the longitudinal direction (20) of the cell (22).

10. Pressure tank in accordance with claim 8 or 9, **characterized in that** the elevation (42; 44) widens away from the chamber wall surface (34) transversely to the longitudinal direction (20).

11. Pressure tank in accordance with any one of claims 8 to 10, **characterized in that** the elevation (42; 44) is of dovetailed construction.

12. Pressure tank in accordance with any one of the preceding claims, **characterized in that** a positive-locking element is formed by a depression (48; 76) opposite a chamber wall surface (34).

13. Pressure tank in accordance with claim 12, **characterized in that** the depression (48; 76) extends in the longitudinal direction (20) of the cell (24; 64).

14. Pressure tank in accordance with claim 12 or 13, **characterized in that** the depression (48; 56) widens away from the chamber wall surface (40) transversely to the longitudinal direction (20).

15. Pressure tank in accordance with any one of claims 12 to 14, **characterized in that** the depression (48; 76) is of dovetailed construction.

16. Pressure tank in accordance with any one of the preceding claims, **characterized in that** adjacent cells (22, 24) are connected by an elevation (42; 44) over the chamber wall surface (34) of a first cell (22) being inserted in a corresponding depression (48; 50) of a chamber wall surface (40) of an adjacent cell (24).

17. Pressure tank in accordance with any one of the preceding claims, **characterized in that** adjacent cells (62, 64) are connected by one or more intermediate elements (84; 86) being inserted in respective depressions (76, 80; 78, 82) of adjacent chamber walls (72, 74) of adjacent cells (62, 64).

18. Pressure tank in accordance with any one of the preceding claims, **characterized in that** adjacent cells are connected by elevations over chamber wall surfaces of adjacent cells being inserted in one or more depressions of intermediate elements.

19. Pressure tank in accordance with any one of the preceding claims, **characterized in that** a cell (22) is freely positionable on an adjacent cell (24) in relation to its longitudinal direction (20).

20. Pressure tank in accordance with any one of the preceding claims, **characterized in that** a cell (22; 24) is so constructed that its chamber wall (52; 54) facing outwards from the cell composite (12) or chamber walls has or have no edges.

21. Pressure tank in accordance with any one of the preceding claims, **characterized in that** an internal spacing (D) between adjacent parallel chamber walls (30, 36) of a cell (24) corresponds to twice the radius (R) of the rounding.

22. Pressure tank in accordance with any one of the preceding claims, **characterized in that** an internal radius (R) of a chamber wall (54) facing outwards from the cell composite (12), measured in mm, lies in the range between a twelfth and an eighth of the internal pressure (P) measured in bar.

23. Pressure tank in accordance with any one of the preceding claims, **characterized in that** a wall thickness (S) of the chamber wall (54) facing outwards from the cell composite (12) lies between P/60 and P/30, P being the internal pressure, measured in bar, and the wall thickness (S) being measured in mm.

24. Pressure tank in accordance with any one of the preceding claims, **characterized in that** the individual cells (14) are formed by extruded profiles.

25. Pressure tank in accordance with any one of the preceding claims, **characterized in that** for termination in the longitudinal direction (20), a cell (14) is respectively provided with a lid element (88).

26. Pressure tank in accordance with claim 25, **characterized in that** a lid element (88) is welded to the associated chamber walls (16).

27. Pressure tank in accordance with claim 25 or 26, **characterized in that** a composite fiber material is wound around the cell composite (12) for holding or additionally securing the lid element or lid elements (28).

28. Pressure tank in accordance with any one of the preceding claims, **characterized by** a configuration for a maximum pressure of at least 600 bar.

29. Pressure tank in accordance with any one of the preceding claims, **characterized in that** chamber walls (16; 54) facing towards the exterior are of curved construction, and curved chamber walls of holding chambers, which are arranged opposite on opposite sides of the pressure tank are in effective connection with respect to force.

30. Pressure tank in accordance with claim 29, **characterized in that** the curvature of opposite holding chambers arranged on opposite sides of the pressure tank is opposite.

31. Pressure tank in accordance with any one of the preceding claims, **characterized in that** opposite holding chambers arranged on opposite sides of the pressure tank are constructed in substantially mirror-symmetrical relation to one another.

32. Pressure tank in accordance with any one of the preceding claims, **characterized in that** the holding chambers are arranged and constructed in the pressure tank such that a force acting on an outer chamber wall can be diverted through the pressure tank towards the opposite side of the pressure tank.

33. Pressure tank in accordance with any one of the preceding claims, **characterized in that** each flat chamber wall (32, 43) is closed to the exterior by a curved chamber wall (16).

34. Pressure tank in accordance with any one of the preceding claims, **characterized in that** tension anchors (128; 130) are arranged between chamber walls (112, 114; 118, 120).

35. Pressure tank in accordance with claim 34, **characterized in that** tension anchors (128) are fixed at connection points (116) between adjacent chamber walls (112, 114).

36. Pressure tank in accordance with any one of the preceding claims, **characterized in that** each cell is connected to each adjacent cell via the chamber walls.

37. Pressure tank in accordance with any one of the preceding claims, **characterized in that** outer cells (108a) are connected to adjacent outer cells (106a, 106b) via the chamber walls.

38. Pressure tank in accordance with claim 37, **characterized in that** tension anchors (128) are arranged between opposite outer cells (106a, 106b).

## Revendications

1. Réservoir sous pression destiné à contenir un fluide se trouvant sous pression, qui est conçu pour une pression maximale d'au moins 250 bar et qui comprend un ensemble de cellules (12) composé d'une multiplicité de cellules (14) avec des chambres de réception (18) respectivement formées entre des parois de chambre (16), dans lequel une paroi de chambre (52, 54) ou des parois de chambre tournée(s) vers l'extérieur de l'ensemble de cellules (12) est/sont arrondie(s), **caractérisé en ce que** des parois de chambre (30, 36; 112, 114) de cellules voisines (22, 24; 106b, 108b) sont assemblées l'une à l'autre pour la formation de l'ensemble de cellules (12; 104) sans liaison extérieure de l'ensemble de cellules (12), par le fait qu'une paroi de chambre (30) d'une première cellule (22), qui est tournée vers une paroi de chambre (36) d'une deuxième cellule voisine (24), est assemblée par emboîtement avec cette paroi de chambre (36) de la deuxième cellule voisine (24).

2. Réservoir sous pression selon la revendication 1, **caractérisé en ce que** les cellules (14) sont configurées de telle manière que les parois de chambre voisines (30, 36) de cellules voisines (22, 24) soient essentiellement parallèles.

3. Réservoir sous pression selon l'une quelconque des revendications précédentes, **caractérisé en ce que** des directions longitudinales des cellules (14) dans l'ensemble de cellules (12) sont essentiellement parallèles.

4. Réservoir sous pression selon l'une quelconque des revendications précédentes, **caractérisé en ce que** des parois de chambre voisines (30, 36) de cellules voisines (22, 24) sont soudées l'une à l'autre.

5. Réservoir sous pression selon l'une quelconque des revendications précédentes, **caractérisé en ce que** des parois de chambre voisines (30, 36; 72, 74) de cellules voisines (22, 24; 62, 64) sont ancrées l'une à l'autre.

6. Réservoir sous pression selon l'une quelconque des revendications précédentes, **caractérisé en ce que** des éléments d'assemblage par emboîtement (42, 48; 76, 80) destinés à l'assemblage par emboîtement de cellules voisines (22, 24; 62, 64) sont formés d'une seule pièce sur les parois de chambre respectives (30, 36; 72, 74).

7. Réservoir sous pression selon l'une quelconque des revendications précédentes, **caractérisé en ce qu'**un mouvement de cellules l'une par rapport à l'autre transversalement à une direction longitudinale (20) des cellules est bloqué par l'assemblage par emboîtement des cellules voisines (22, 24; 62, 64).

8. Réservoir sous pression selon l'une quelconque des revendications précédentes, **caractérisé en ce qu'**un élément d'assemblage par emboîtement est formé sur une paroi de chambre (30) par une surélévation (42; 44) au-dessus d'une surface extérieure de paroi de chambre (34).

9. Réservoir sous pression selon la revendication 8, **caractérisé en ce que** la surélévation (42; 44) s'étend dans la direction longitudinale (20) de la cellule (22).

10. Réservoir sous pression selon la revendication 8 ou 9, **caractérisé en ce que** la surélévation (42; 44) s'élargit transversalement à la direction longitudinale (20) en s'écartant de la surface de paroi de chambre (34).

11. Réservoir sous pression selon l'une quelconque des revendications 8 à 10, **caractérisé en ce que** la surélévation (42; 44) est réalisée en forme de queue d'aronde.

12. Réservoir sous pression selon l'une quelconque des revendications précédentes, **caractérisé en ce qu'**un élément d'assemblage par emboîtement est formé par un creux (48; 76) par rapport à une surface de paroi de chambre (34).

13. Réservoir sous pression selon la revendication 12, **caractérisé en ce que** le creux (48; 76) s'étend dans la direction longitudinale (20) de la cellule (24; 64).

14. Réservoir sous pression selon la revendication 12 ou 13, **caractérisé en ce que** le creux (48; 56) s'élargit transversalement à la direction longitudinale (20) en s'écartant de la surface de paroi de chambre (40).

15. Réservoir sous pression selon l'une quelconque des revendications 12 à 14, **caractérisé en ce que** le creux (48; 76) est réalisé en forme de queue d'aronde.

16. Réservoir sous pression selon l'une quelconque des revendications précédentes, **caractérisé en ce que** des cellules voisines (22, 24) sont assemblées par le fait qu'une surélévation (42; 44) au-dessus de la surface de paroi de chambre (34) d'une première cellule (22) est insérée dans un creux correspondant (48; 50) d'une surface de paroi de chambre (40) d'une cellule voisine (24).

17. Réservoir sous pression selon l'une quelconque des revendications précédentes, **caractérisé en ce que** des cellules voisines (62, 64) sont assemblées par le fait qu'un ou plusieurs élément(s) intermédiaire(s) (84; 86) est/sont inséré(s) dans des creux respectifs (76, 80; 78, 82) de parois de chambre voisines (72, 74) de cellules voisines (62, 64).

18. Réservoir sous pression selon l'une quelconque des revendications précédentes, **caractérisé en ce que** des cellules voisines sont assemblées par le fait que des surélévations au-dessus de surfaces de paroi de chambre de cellules voisines sont insérées dans un ou plusieurs creux d'éléments intermédiaires.

19. Réservoir sous pression selon l'une quelconque des revendications précédentes, **caractérisé en ce qu'**une cellule (22) peut être positionnée librement sur une cellule voisine (24) par rapport à sa direction longitudinale (20).

20. Réservoir sous pression selon l'une quelconque des revendications précédentes, **caractérisé en ce qu'**une cellule (22; 24) est configurée de telle manière que sa paroi de chambre (52; 54) ou ses parois de chambre tournée(s) vers l'extérieur de l'ensemble de cellules (12) est/sont exempte(s) d'arêtes.

21. Réservoir sous pression selon l'une quelconque des revendications précédentes, **caractérisé en ce qu'**une distance intérieure (D) de parois de chambre parallèles voisines (30, 36) d'une cellule (24) correspond au double du rayon (R) de l'arrondi.

22. Réservoir sous pression selon l'une quelconque des revendications précédentes, **caractérisé en ce qu'**un rayon intérieur (R) d'une paroi de chambre (54) tournée vers l'extérieur de l'ensemble de cellules (12), mesuré en mm, se situe dans une plage comprise entre un douzième et un huitième de la pression intérieure (P), mesurée en bar.

23. Réservoir sous pression selon l'une quelconque des revendications précédentes, **caractérisé en ce qu'**une épaisseur de paroi (S) de la paroi de chambre (54) tournée vers l'extérieur de l'ensemble de cellules (12) se situe entre P/60 et P/30, dans lequel P est la pression intérieure, mesurée en bar, et l'épaisseur de paroi (S) est mesurée en mm.

24. Réservoir sous pression selon l'une quelconque des revendications précédentes, **caractérisé en ce que** les cellules individuelles (14) sont formées au moyen de profilés extrudés.

25. Réservoir sous pression selon l'une quelconque des revendications précédentes, **caractérisé en ce qu'**une cellule (14) est respectivement munie d'un élément de couvercle (88) pour sa fermeture dans la direction longitudinale (20).

26. Réservoir sous pression selon la revendication 25, **caractérisé en ce qu'**un élément de couvercle (88) est soudé aux parois de chambre associées (16).

27. Réservoir sous pression selon la revendication 25 ou 26, **caractérisé en ce que** l'ensemble de cellules (12) est enveloppé avec un matériau composite fibreux pour maintenir ou fixer en plus le ou les élément(s) de couvercle (88).

28. Réservoir sous pression selon l'une quelconque des revendications précédentes, **caractérisé par** une conception pour une pression maximale d'au moins 600 bar.

29. Réservoir sous pression selon l'une quelconque des revendications précédentes, **caractérisé en ce que** des parois de chambre (16; 54) tournées vers l'espace extérieur sont réalisées en forme de voûte et dans lequel des parois de chambre voûtées, qui sont disposées en face l'une de l'autre sur les côtés opposés du réservoir sous pression, se trouvent en liaison active par la force.

30. Réservoir sous pression selon la revendication 29, **caractérisé en ce que** la courbure de chambres de réception disposées l'une en face de l'autre sur des côtés opposés du réservoir sous pression est de sens contraire.

31. Réservoir sous pression selon l'une quelconque des revendications précédentes, **caractérisé en ce que** des chambres de réception disposées l'une en face de l'autre sur des côtés opposés du réservoir sous pression sont configurées de façon essentiellement symétrique l'une par rapport à l'autre.

32. Réservoir sous pression selon l'une quelconque des revendications précédentes, **caractérisé en ce que** les chambres de réception sont disposées dans le réservoir sous pression et configurées de telle manière qu'une force agissant sur une paroi de chambre extérieure puisse être déviée à travers le réservoir sous pression sur le côté opposé du réservoir sous pression.

33. Réservoir sous pression selon l'une quelconque des revendications précédentes, **caractérisé en ce que** chaque paroi de chambre plane (32, 43) est fermée vers l'espace extérieur par une paroi de chambre voûtée (16).

34. Réservoir sous pression selon l'une quelconque des revendications précédentes, **caractérisé en ce que** des tirants d'ancrage (128; 130) sont disposés entre des parois de chambre (112, 114; 118, 120).

35. Réservoir sous pression selon la revendication 34, **caractérisé en ce que** des tirants d'ancrage (128) sont fixés à des points d'assemblage (116) entre des parois de chambre voisines (112, 114).

36. Réservoir sous pression selon l'une quelconque des revendications précédentes, **caractérisé en ce que** chaque cellule est assemblée à chaque cellule voisine par les parois de chambre.

37. Réservoir sous pression selon l'une quelconque des revendications précédentes, **caractérisé en ce que** des cellules extérieures (108a) sont assemblées à des cellules extérieures voisines (106a, 106b) par les parois de chambre.

38. Réservoir sous pression selon la revendication 37, **caractérisé en ce que** des tirants d'ancrage (128) sont disposés entre des cellules extérieures opposées (106a, 106b).
